# EUROPEAN PATENT APPLICATION

(11) **EP 2 555 291 A1**
(43) Date of publication of application: **06.02.2013**
(21) Application number: 11759053.9
(22) Date of filing: 18.01.2011
(51) Int. Cl.: H01M 4/88, H01M 8/02, H01M 8/10

(54) **METHOD FOR MANUFACTURING FUEL CELL MEMBRANE ELECTRODE ASSEMBLY AND APPARATUS FOR MANUFACTURING FUEL CELL MEMBRANE ELECTRODE ASSEMBLY**

(30) Priority: 26.03.2010 JP 2010073070
(71) Applicant: Toppan Printing Co., Ltd., Taito-ku, Tokyo 110-0016 (JP)
(72) Inventor: HABA Yasuhiro, Tokyo 110-0016 (JP)
(74) Representative: Staudt, Hans-Peter
(86) International application number: PCT/JP2011/050767
(87) International publication number: WO 2011/118244

(57) **Abstract**

The present invention provides a producing method of a fuel cell membrane electrode assembly and a producing apparatus of the same, without generating wrinkles on a solid polymer electrolyte membrane or misalignment of electrode catalyst layers opposite to each other. A producing method of a fuel cell membrane electrode assembly, the producing method comprising the steps of: arranging a pair of base materials 90 each coated with an electrode catalyst layer 70 to interpose a solid polymer electrolyte membrane 13; and applying a thermal pressure with a pair of laminator rolls 50 and 60 on the pair of base materials from the outside to thermally transfer the electrode catalyst layers 70 onto both surfaces of the solid polymer electrolyte membrane 13, wherein a laminator roll formed with a convex portion having a same shape with those of the electrode catalyst layers 11 and 12 to be transferred onto the surfaces of the solid polymer electrolyte membrane 13 is used for at least one of the pair of laminator rolls 50 and 60. Accordingly, it is possible to produce a membrane electrode assembly with high quality, without generating wrinkles on the solid polymer electrolyte membrane 13 or misalignment of electrode catalyst layers opposite to each other.

## Description

### Technical Field

The present invention relates to a producing method of a fuel cell membrane electrode assembly constituting a polymer electrolyte fuel cell and a producing apparatus thereof.

### Background Art

A conventional polymer electrolyte fuel cell has a membrane electrode assembly in which a solid polymer electrolyte membrane is interposed between two electrodes (oxidation electrode and reduction electrode) and this membrane electrode assembly is interposed between gas diffusion layers. Then, hydrogen and oxygen are supplied to the anode and cathode to develop an electrochemical reaction for the power generation. A fuel cell is different from a conventional power generator in that only water is generated in a power generating state, and is expected as a clean power generator that does not produce an environmental load gas such as carbon dioxide that becomes problematic in these years.

Several methods are proposed as methods for producing the membrane electrode assembly. For example, as disclosed in Patent Document 1 listed below, the electrode catalyst ink for the fuel cell in which catalyst-supporting conductive particles and high polymer molecules with ion conductivity are dissipated in an organic solvent is applied onto a transfer base material to form an electrode catalyst layer. Such a formed electrode catalyst layer is cut into a predefined shape and then interposes the solid polymer electrolyte membrane to be subject to thermocompression bonding by a thermal press or a laminator.

In addition, as disclosed in Patent Document 2 listed below, after the electrode catalyst ink for the fuel cell is applied onto the transfer base material to have a predefined shape, the transfer sheet with the electrode catalyst layer is arranged to be held by the solid polymer electrolyte membrane. The transfer sheet is subject to the thermocompression bonding by the thermal press or the laminator, and is then cut into a predefined shape of the membrane electrode assembly.
Furthermore, as disclosed in Patent Document 3 listed below, after the electrode catalyst ink for the fuel cell is applied onto the transfer base material, a predefined shape is transferred by the press or the laminator that are processed so that the electrode shape can be a convex portion.

### Prior Art Documents

### Patent Documents

Patent Document 1: JP 2001-196070 A
Patent Document 2: JP 2006-185762 A
Patent Document 3: JP 2009-37916 A

### Summary of the Invention

### Problem to be Solved

As a method for producing a membrane electrode assembly, however, it may take time to align the catalyst layers and thereby cause misalignment, in a case where the electrode catalyst ink for the fuel cell in which the catalyst-supporting conductive particles and the solid polymer electrolyte membrane are dissipated in an organic solvent is applied onto the transfer base material to form an electrode catalyst layer and such a formed electrode catalyst layer is cut into a predefined shape and then held by the solid polymer electrolyte membrane to be subject to thermocompression bonding by a thermal press or a laminator.
Besides, the misalignment may occur similarly, in a case where after the electrode catalyst ink for the fuel cell is applied onto the transfer base material to have a predefined shape, the transfer sheet with the electrode catalyst layer is arranged to be held by the solid polymer electrolyte membrane film, is subject to the thermocompression bonding by the thermal press or the laminator, and is then cut into a predefined shape of the membrane electrode assembly.

Moreover, in a case where after the electrode catalyst ink for the fuel cell is applied onto the transfer base material, a predefined shape is transferred onto both surfaces of the solid polymer electrolyte membrane film by the thermal press or the laminator that are processed so that the electrode shape can be a convex portion, the potential of the misalignment is reduced and the production takt is improved. However, there is a problem of the edge shape or wrinkles generated on the solid polymer electrolyte membrane.
The present invention has been made in view of the above problems, and has an object to provide a producing method of a fuel cell membrane electrode assembly and a producing apparatus of the same, without generating wrinkles on a solid polymer electrolyte membrane or misalignment between electrode catalyst layers opposite to each other.

### Solution to the Problem

In order to solve the above problems, the present invention has employs the following measures.
There is provided a producing method of a fuel cell membrane electrode assembly, the producing method comprising the steps of: arranging a pair of base materials each coated with an electrode catalyst layer to interpose a solid polymer electrolyte membrane; and applying a thermal pressure with a pair of laminator rolls on the pair of base materials from the outside to thermally transfer the electrode catalyst layers onto both surfaces of the solid polymer electrolyte membrane, wherein a laminator roll with a surface formed with a convex portion having a same shape with those of the electrode catalyst layers to be transferred onto the surfaces of the solid polymer electrolyte membrane side is used for at least one of the pair of laminator rolls. By use of such a laminator roll, it is made possible to thermally transfer a pair of electrode catalyst layers onto the solid polymer electrolyte membrane precisely without misalignment.

In addition, protective films may be further provided on the outside of the pair of base materials, and thermal pressure is applied through the pair of laminator rolls from the outside of the protective films to thermally transfer the electrode catalyst layers onto the both surfaces of the solid polymer electrolyte membrane. This eliminates the wrinkle generation on the solid polymer electrolyte membrane, so that an air bubble will not enter between the electrode catalyst layer and the solid polymer electrolyte membrane.
In general, as the base material coated with the electrode catalyst layer has a coefficient of thermal expansion different from that of the solid polymer electrolyte membrane, when the electrode catalyst layer and the solid polymer electrolyte membrane are aligned with each other at around room temperature, for example and then the electrode catalyst layer is thermally transferred, wrinkles may be generated on the solid polymer electrolyte membrane. Furthermore, for example, even in a case where the degree of porosity is increased for improving the performance of the membrane electrode assembly, pre-heating is needed prior to the thermal transfer so that the bondability of the polymer electrolyte and the electrode catalyst layer needs to be improved.

After the electrode catalyst layers are pasted to the solid polymer electrolyte membrane from the base materials, the thermal laminate is applied onto the protective films before the base materials are peeled off. It is possible to further improve the performance of the membrane electrode assembly.
Moreover, after thermocompression bonding is applied onto the electrode catalyst layers and the polymer electrolyte, and the base materials are peeled off with its temperature kept, it is possible to suppress the dropping of the electrode catalyst layer or peeling from the polymer electrolyte. It is also possible to prevent deformation such as wrinkles near the electrode catalyst layers of the solid polymer electrolyte membrane or curling of the membrane electrode assembly itself.

By setting the height of the convex portion for transferring the electrode catalyst layer is 0.2 mm to 3.0 mm, it is made possible to eliminate the wrinkles or damages of the solid polymer electrolyte membrane for improving the accuracy to shape of the electrode catalyst layer.
. It is possible to eliminate the wrinkles or damages of the solid polymer electrolyte membrane for improving the accuracy to shape of the electrode catalyst layer, to use a material having elastic modulus smaller than that of a surface of the convex portion for the surface of a gap between the convex portions of the laminator roll.
The membrane electrode assemblies produced in the above method exhibit good electrical characteristics and do not have a defect in appearance.

### Advantageous Effects of the Invention

According to the present invention, it is possible to produce a high-quality fuel cell membrane electrode assembly in an efficient fashion, without generating wrinkles on a solid polymer electrolyte membrane or misalignment between electrode catalyst layers opposite to each other.

### Brief Description of the Drawings

FIG. 1 is an exploded perspective view of a polymer electrolyte fuel cell 100 according to the present invention;
FIG. 2 is a perspective view illustrative of an example of a laminator roll 50 used in the present invention;
FIG. 3 is a cross-sectional view of the laminator roll 50 used in the present invention;
FIG. 4 is an explanatory diagram illustrative of an embodiment of a producing method of a membrane electrode assembly according to the present invention;
FIG. 5 is an explanatory diagram illustrative of another embodiment of the producing method of the membrane electrode assembly according to the present invention; and
FIG. 6 is an explanatory diagram illustrative of further another embodiment of the producing method of the membrane electrode assembly according to the present invention.

### Description of Embodiments

Hereinafter, a producing method of a fuel cell membrane electrode assembly according to the present invention will be described. Specifically, the present invention is not limited to each of embodiments to be described below. Modifications such as changes in design based on knowledge of persons skilled in the art are applicable, and embodiments having such changes can also be included in the scope of the present invention.

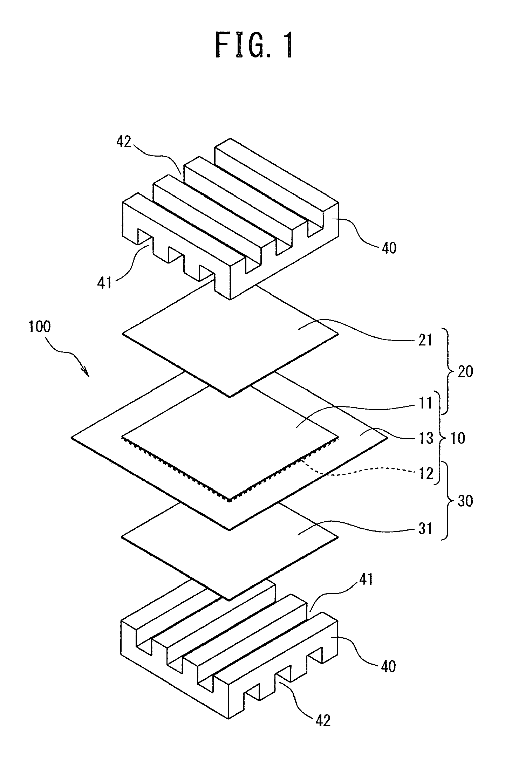

FIG. 1 is an exploded perspective view of a polymer electrolyte fuel cell 100, according to the present invention. As illustrated, in the polymer electrolyte fuel cell 100, an air electrode side gas diffusion layer 21 and a fuel electrode side gas diffusion layer 31 are arranged to face an electrode catalyst layer 11 and an electrode catalyst layer 12, respectively, of a membrane electrode assembly 10. Thus, the air electrode 20 and the fuel electrode 30 are respectively constituted. In the membrane electrode assembly 10, a solid polymer electrolyte membrane 13 is interposed between the electrode catalyst layer 11 and the electrode catalyst layer 12.

Additionally, the air electrode 20 side is provided with gas passages 41 for circulating gases, and the fuel electrode 30 side is provided with a pair of separators 40 each made of a conductive and impermeable material and each having a coolant passage 42 for circulating the coolant. For instance, hydrogen gas is supplied as a fuel gas from the gas passage 41 of the separator 40 on the fuel electrode 30 side. On the other hand, for instance, gas including oxygen is supplied as an oxidant gas from the gas passage 41 of the separator 40 on the air electrode 20 side.
Note that FIG. 1 illustrates a polymer electrolyte fuel cell having a so-called single cell structure, in which the electrode catalyst layers 11 and 12 and the gas diffusion layers 21 and 31 are interposed between the pair of separators 40. Multiple cells, however, may be multiply laminated via the separators 40.

Next, a method of forming the electrode catalyst layers 11 and 12 will be described. The electrode catalyst layers 11 and 12 include catalyst-supporting conductive particles and ion-conducting polymer.
The catalyst-supporting conductive particle includes a carrier with conductivity and a catalytic metal with catalytic capacity. The catalytic metal is not limited to a special one, as far as the cathode has a reductive reaction for oxygen and the anode has an oxidative reaction for hydrogen. In detail, an elementary substance of a transition metal, or alloy, oxide, double oxide, carbide, or complex of a metal or metals selected from a transition metal group are preferable. Above all, in particular, Pt, Pd, Ni, Ir, Rh, Co, Os, Ru, Fe, Au, Ag, and Cu are preferable. Alloy, oxide, double oxide, carbide, or complex of a metal or metals selected from a group consisting of Pt, Pd, Ni, Ir, Rh, Co, Os, Ru, Fe, Au, Ag, and Cu are also preferable. In addition, as a particle size, 1 nm to 10 nm is preferable in consideration of the rate of utilization, reactive property, and stability of a catalytic metal.

As a carrier with conductivity, there is no limitation in particular and a well-known one can be used. Carbon particles are typical ones. Specifically, examples are carbon particles such as carbon black, acetylene black, Ketjenblack, carbon nanotube, fullerene, solid acid aggregate, and the like, and one kind or more can be selected therefrom. As a particle size, 10 nm to 100 nm is preferable.

In addition, the electrode catalyst layers 11 and 12 may be combined with conductive particles not supporting the catalyst, in addition to the catalyst-supporting conductive particles. Furthermore, additives such as a water-repellent material or a pore-forming material may be added to improve the water repellency of the electrode catalyst layers 11 and 12.
Moreover, the high polymer included in the electrode catalyst layers 11 and 12 should have ion conductivity. However, specifically, fluorine-based polyelectrolyte and hydrocarbon-based polyelectrolyte can be used. As the fluorine-based polyelectrolyte, for example, Nafion (registered trademark) of DuPont, Flemion (registered trademark) of ASAHI GLASS Co., Ltd, Aciplex (registered trademark) of Asahi Kasei Corporation, GoreSelect (registered trademark) of W. L. Gore & Associates, Inc. can be used. As the hydrocarbon-based polyelectrolyte, sulfonated polyether ketone, sulfonated polyether sulfone, sulfonated polyether ether sulfone, sulfonated polysulfide, and sulfonated polyphenylene can be used. Above all, Nafion (registered trademark) of DuPont, sulfonated polyether-ketone, sulfonated polyethersulfone, sulfonated polyether ether sulfone, sulfonated polysulfide, and sulfonated polyphenylene are preferable. Moreover, in consideration of adhesion of the electrode catalyst layer and the polymer electrolyte, it is preferable to select the same material with the solid polymer electrolyte membrane.

The catalyst-supporting conductive particles, the ion-conducting high polymer, dispersing agent and additive agent are appropriately added to produce ink, and such produced ink is coated over the base material and dried. Thus, the formation is completed.
As coating methods, doctor blade method, dipping method, screen printing method, laminator roll coating method, and spraying method can be mentioned, but the present invention is not limited thereto, in particular. An optimal method may be selected depending on the base material.
The electrode catalyst layers 11 and 12 are transferred to the solid polymer electrolyte membrane 13 via base materials 90, respectively, as will be described later.

The base material 90 is not limited in particular, but should be selected so that the electrode catalyst layers 11 and 12 are mold-released by the thermocompression bonding.
Specifically, examples are fluorinated resins such as PTFE, ETFE, and the like, a mold release agent with a silicone resin or the like coated on its surface, a polymeric film such as a PET film, polyimide, PEEK, a metal plate such as SMS, and the like. The base material 90, however, is not limited in particular, as far as the electrode catalyst layers 11 and 12 are printed in a good condition and are transferred to the solid polymer electrolyte membrane 13 in a good condition.

Additionally, the base material 90 may be subject to the surface processing such as embossing, blasting, rarefaction, corona treatment, or the like.
The coating pattern onto the base material 90 may take any type such as continuous, stripe state, intermittent state, or the like. In order to effectively utilize the electrode catalyst layers 11 and 12 and the base materials 90, the printing should be made at the size equal to or larger than the electrode area of the intended membrane electrode assembly 10, as necessary.

The solid polymer electrolyte membrane 13 according to the present invention has ion conductivity. As fluorine-based polyelectrolyte membranes, examples are Nafion (registered trademark) of DuPont, Flemion (registered trademark) of ASAHI GLASS Co., Ltd, Aciplex (registered trademark) of Asahi Kasei Corporation, and GoreSelect (registered trademark) of W. L. Gore & Associates, Inc. As the hydrocarbon-based polyelectrolyte membrane, examples are electrolyte membranes such as sulfonated polyether ketone, sulfonated polyethersulfone, sulfonated polyether ether sulfone, sulfonated polysulfide, sulfonated polyphenylene, without limiting thereto. The membrane thickness is preferably 5 µm to 100 µm.

A description will be given of a laminator transferring method of the electrode catalyst layers 11 and 12 onto the solid polymer electrolyte membrane 13 from the base materials 90, according to the present invention.

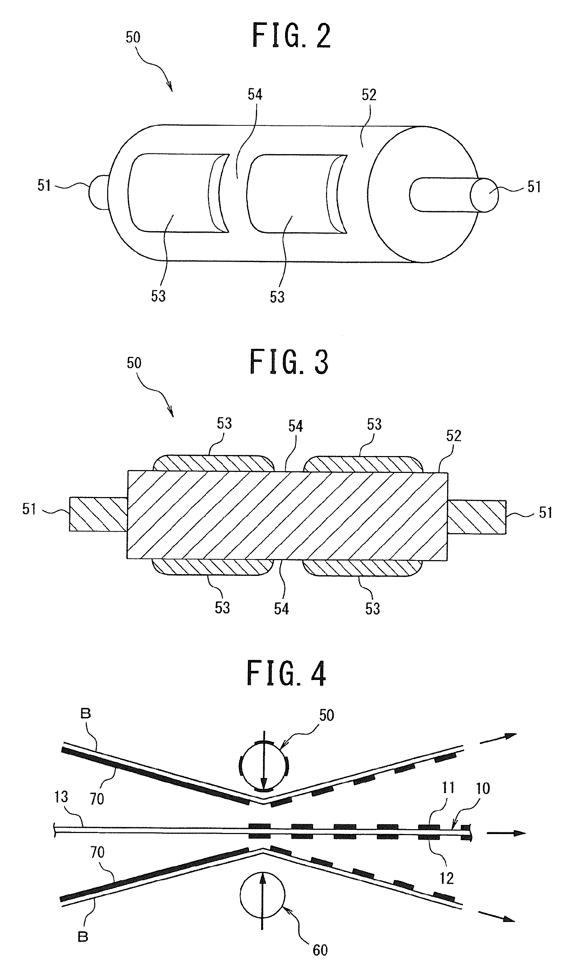

FIG. 2 is a perspective view illustrative of an example of a laminator roll 50 for use in the method according to the present invention. FIG. 3 is a cross-sectional view thereof. As illustrated, the laminator roll 50 has plural convex portions 53 on the surface of a roll main body 52 provided with a rotational shaft 51. The convex portion 53 is curved along the roll main body 52 to have a curved surface, and its plane surface has the same shape as those of the electrode catalyst layers 11 and 12 of the membrane electrode assembly 10. The surface material of the convex portion 53 is made of a metal such as a stainless steel. However, in addition to the metal, a rubber material such as silicon rubber, fluororubber or butadiene rubber may be employed.
The plane shape of the convex portion 53 may be substantially same as those of the electrode catalyst layers 11 and 12, as long as it can form desired shapes of the electrode catalyst layers 11 and 12. In addition, the size of the convex portion 53 may be designed appropriately in accordance with the sizes of the electrode catalyst layers 11 and 12 to be formed.
The number of the convex portions 53 arranged on the surface of the laminator roll 50 is not limited in particular. However, its design may be made appropriately by providing a chamfered potion without a loss, in consideration of the area of the solid electrolyte of the fuel cell membrane electrode assembly to be finally formed and the roll width of the solid electrolyte.

Then, referring to FIG. 4, the above-described laminator roll 50 and a laminator roll 60 having a smooth surface that does not have the convex portion 53 on the surface thereof are set to be capable of becoming closer to each other and spaced apart from each other. The solid polymer electrolyte membrane 13 and a pair of base materials 90 continuously coated with electrode catalyst layers 70 to interpose the solid polymer electrolyte membrane 13 are continuously made to pass between the laminator rolls 50 and 60, while pressurizing the laminator rolls 50 and 50, so that the electrode catalyst layers 11 and 12 each having an intended shape are intermittently, thermally transferred onto both surfaces of the solid polymer electrolyte membrane 13.
In this manner, the electrode catalyst layers 11 and 12 are intermittently transferred onto the solid polymer electrolyte membrane 13, thereby enabling a producing method of the membrane electrode assembly 10 with a fast production takt time.

Further, as illustrated in FIG. 2, the laminator rolls 50 and 60 are capable of adjusting a gap with a gap adjustment, so that a gap 54 between the convex portions 53 of the laminator roll 50 will not damage the solid polymer electrolyte membrane 13. Moreover, after the pair of the laminator rolls 50 and 60 transfer the pair of the electrode catalyst layers 11 and 12, the gap is widened and the feeding speed of the solid polymer electrolyte membrane 13 only is changed. Thus, the loss of the electrode catalyst layers 11 and 12 is eliminated. In FIG. 4, the laminator roll 50 is processed such that an electrode of the membrane electrode assembly 10 has an intended convex shape on the surface thereof, whereas the laminator roll 60 opposite to the laminator roll 50 has a smooth surface. Instead of the smooth laminator roll 60, however, the laminator roll 50 that is processed such that an electrode of the membrane electrode assembly 10 has an intended shape corresponding to the convex portion 53 on the surface thereof may be employed in a similar manner to the laminator roll 50.

The temperature of the laminator roll 50 at the time of transferring the electrode catalyst layers 11 and 12 is preferably 80 °C to 150 °C. More preferably, 100 °C to 140 °C. As the thermal transfer is conducted at such temperatures, it is possible to enhance the performance of the membrane electrode assembly. When the temperature falls out of the above range, there is a high possibility that the heat deterioration occurs at the solid polymer electrolyte membrane 13 or defective transfer occurs at the electrode catalyst layers 11 and 12.

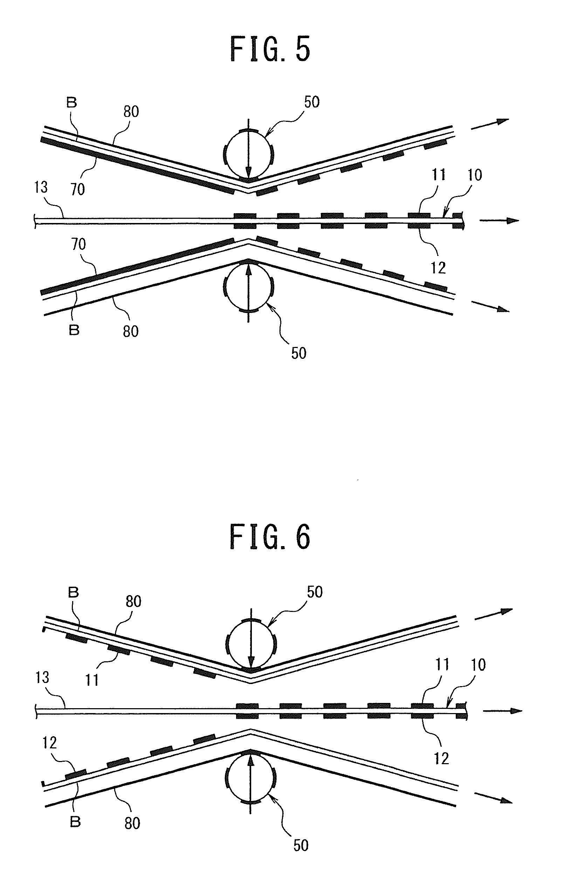

In addition, as illustrated in FIG. 5, in order to reduce wrinkle generation on the solid polymer electrolyte membrane 13, protective films 80 may be arranged on the outside of the base materials 90, respectively, on which the electrode catalyst layers 70 are continuously coated. Specifically, in a case of using the laminator rolls 50 that are processed such that the membrane electrode assembly 10 has an intended convex electrode shape on the surface thereof, it is desirable that the laminator rolls 50 be made opposite to each other in synchronization with each other not to cause the misalignment of the electrode catalyst layers 11 and 12.

Furthermore, as illustrated in FIG. 6, the electrode catalyst layers 11 and 12 are pattern-coated on the base materials 90 beforehand to enable the reduction in the loss (waste) of the electrode catalyst layer 70. Moreover, the protective film 80 is not limited in particular, as long as it has smoothness and heat resistance. PET, PP, PTFE, ETFE, polyimide, and PEEK is desirable. Further, the thickness thereof is not limited, but 15 µm to 100 µm is desirable. When the thickness is smaller than 15 µm, the prevention of the wrinkle generation on the solid polymer electrolyte membrane 13 is ineffective. When the thickness is greater than 100 µm, this causes a problem that the production costs will increase.

In addition, before the electrode catalyst layers 11 and 12 are thermally transferred onto the solid polymer electrolyte membrane 13 by the laminator roll 50, the base materials 90, the solid polymer electrolyte membrane 13, and the protective films 80 are pre-heated so that the generation of wrinkles or curling on the membrane electrode assembly 10 to be produced can be prevented in an effective manner. The pre-heating temperature is preferably 50 °C to 140 °C. As a pre-heating method, any method such as warm air, IR, or thermal lamination can be employed. However, before the thermal transfer, the wrinkle generation on the membrane electrode assembly 10 can be prevented, unless the temperature drops below 50 °C.

Furthermore, it would be much better that to thermally transfer the electrode catalyst layers 11 and 12 onto the solid polymer electrolyte membrane 13 and to use a heated roll in peeling the base materials 90. As the heated roll, there is a roll having a heating mechanism. Moreover, from the thermal transfer to the peeling, it is desirable not to drop the temperatures of the base materials 90 and the membrane electrode assembly 10 to 50 °C or lower. This makes it possible to eliminate transfer leftovers of the electrode catalyst layers 11 and 12.
Further, the height of the convex portion 53 of the laminator roll 50 (the height from the surface of the roll main body 52) is not limited in particular, but 0.2 mm to 3 mm is desirable. This makes it possible to thermally transfer the electrode catalyst layers 11 and 12 with high accuracy in shape.

In addition, it is desirable that an edge portion of the convex portion 53 in the laminator roll 50 be round chamfered, as illustrated in FIG. 3. This makes it possible to thermally transfer the electrode catalyst layers 11 and 12 with high accuracy in shape. Specifically, the value of the round may be set within a range where the electrode catalyst layers 11 and 12 can be thermally transferred with high accuracy in shape. In detail, however, it is preferable that the range fall within 0.1 mm to 0.5 mm.
Furthermore, the convex portion 53 of the laminator roll 50 may have both convex and concave on its surface. This allows in-plane distributions in porous properties of the electrode catalyst layers 11 and 12, resulting in the enhanced water-repellency and conductivity of the electrode catalyst layers 11 and 12. It is thus possible to enhance the performance of the membrane electrode assembly 10. To be specific, the surface roughness of the convex portion 53 is preferably 0.5 µm to 5 µm.

Moreover, it is desirable that the surface of a gap between the convex portions 53 of the laminator roll 50 be made of a material having elastic modulus smaller than that of the surface of the convex portion 53. That is to say, when only the electrode catalyst layers 11 and 12 of the solid polymer electrolyte membrane 13 are pressurized, winkles may be generated on the solid polymer electrolyte membrane 13. Therefore, in the thermal transfer of the electrode catalyst layers 11 and 12, no wrinkles will be generated by applying a weaker pressure also onto a part where the electrode catalyst layer 11 or the electrode catalyst later 12 of the solid polymer electrolyte membrane 13 is not necessary.
If the pressure is too strong, however, the electrode catalyst layers 11 and 12 will be transferred also onto the part where the electrode catalyst layer 11 or the electrode catalyst layer 12 of the solid polymer electrolyte membrane 13 is not necessary. Accordingly, the use of the material having elastic modulus smaller than that of the convex portion 53 at the gap between the convex portions 53 will prevent the electrode catalyst layers 11 and 12 from being thermally transferred to the gap between the convex portions 53.

### Industrial Availability

By use of a producing method of a fuel cell membrane electrode assembly according to the present invention, it is possible to produce a membrane electrode assembly 10 with good performance and good appearance shape, without generating wrinkles on the solid polymer electrolyte membrane or misalignment of electrode catalyst layers opposite to each other.

### Reference Signs List

- 10: membrane electrode assembly
- 11: electrode catalyst layer (air electrode side)
- 12: electrode catalyst layer (fuel electrode side)
- 13: solid polymer electrolyte membrane
- 20: air electrode
- 21: gas diffusion layer (air electrode side)
- 30: fuel electrode
- 31: gas diffusion layer (fuel electrode side)
- 40: separator
- 41: gas passage
- 42: coolant passage
- 50: laminator roll (with a convex portion)
- 51: rotational shaft
- 52: roll main body
- 53: convex portion
- 54: gap
- 60: laminator roll (without a convex portion)
- 70: electrode catalyst layer
- 80: protective film
- 90: base material
- 100: polymer electrolyte fuel cell

## Claims

1. A producing method of a fuel cell membrane electrode assembly, the producing method comprising the steps of:
arranging a pair of base materials each coated with an electrode catalyst layer to interpose a solid polymer electrolyte membrane; and
applying a thermal pressure with a pair of laminator rolls on the pair of base materials from the outside to thermally transfer the electrode catalyst layers onto both surfaces of the solid polymer electrolyte membrane,
wherein a laminator roll with a surface formed with a convex portion having a same shape with those of the electrode catalyst layers to be transferred onto the solid polymer electrolyte membrane side is used for at least one of the pair of laminator rolls.

2. The producing method of the fuel cell membrane electrode assembly according to claim 1, wherein protective films are further provided on the outside of the pair of base materials, and the thermal pressure is applied from the outside of the protective films by the pair of laminator rolls to thermally transfer the electrode catalyst layers onto the both surfaces of the solid polymer electrolyte membrane.

3. The producing method of the fuel cell membrane electrode assembly according to claim 1 or claim 2, further comprising pre-heating the solid polymer electrolyte membrane and the pair of base materials coated each with the electrode catalyst layer, before the electrode catalyst layer is thermally transferred.

4. The producing method of the fuel cell membrane electrode assembly according to claim 2, further comprising pre-heating the protective films, before the electrode catalyst layer is thermally transferred.

5. The producing method of the fuel cell membrane electrode assembly according to any one of claim 1 to claim 4, wherein thermal lamination is applied, before the pair of base materials onto which the thermal pressure is applied with the laminator roll are peeled from the solid polymer electrolyte membrane.

6. The producing method of the fuel cell membrane electrode assembly according to any one of claim 1 to claim 4, wherein the pair of base materials are peeled from the solid polymer electrolyte membrane, while the pair of base materials onto which the thermal pressure is applied with the pair of laminator rolls are being heated.

7. The producing method of the fuel cell membrane electrode assembly according to any one of claim 1 to claim 6, wherein a height of the convex portion of the laminator roll is 0.2 mm to 3.0 mm.

8. The producing method of the fuel cell membrane electrode assembly according to any one of claim 1 to claim 7, wherein a surface of a gap between the convex portions of the laminator roll is made of a material having elastic modulus smaller than that of a surface of the convex portion.

9. A producing apparatus of a fuel cell membrane electrode assembly comprising a pair of laminator rolls for applying, from the outside, a thermal pressure on a pair of base materials each coated with an electrode catalyst layer to thermally transfer the electrode catalyst layers on both surfaces of a solid polymer electrolyte membrane, the pair of base materials being arranged to interpose the solid polymer electrolyte membrane,
wherein at least one of the pair of laminator rolls is a laminator roll with a surface formed with a convex portion having a same shape with those of the electrode catalyst layers to be transferred onto the solid polymer electrolyte membrane side.

10. The producing apparatus of the fuel cell membrane electrode assembly according to claim 9, wherein a height of the convex portion of the laminator roll is 0.2 mm to 3.0 mm.

11. The producing apparatus of the fuel cell membrane electrode assembly according to claim 9 or claim 10, wherein a surface of a gap between the convex portions of the laminator roll is made of a material having elastic modulus smaller than that of a surface of the convex portion.
